# EUROPÄISCHE PATENTSCHRIFT

(11) **EP 3 927 662 B1**
(45) Veröffentlichungstag und Bekanntmachung des Hinweises auf die Patenterteilung: **19.06.2024**
(21) Anmeldenummer: 20706670.5
(22) Anmeldetag: 18.02.2020
(51) Int. Cl.: C02F 1/00, B01D 33/01, B01D 33/42, B01D 35/153

(54) **TRANSPORTABLE WASSERREINIGUNGSVORRICHTUNG**
TRANSPORTABLE WATER PURIFICATION DEVICE
DISPOSITIF DE PURIFICATION D'EAU TRANSPORTABLE

(30) Priorität: 21.02.2019 DE 102019001305
(43) Veröffentlichungstag der Anmeldung: 29.12.2021
(73) Patentinhaber: Trappe, Lars, 48329 Havixbeck (DE)
(72) Erfinder: Trappe, Lars, 48329 Havixbeck (DE)
(74) Vertreter: Pelster Behrends Patentanwälte PartG mbB
(86) Internationale Anmeldenummer: PCT/EP2020/054213
(87) Internationale Veröffentlichungsnummer: WO 2020/169587

(56) Entgegenhaltungen:
- CN-A- 107 324 605
- US-A- 5 433 848
- US-A1- 2008 251 434

## Beschreibung

Die vorliegende Erfindung betrifft ein Kanistersystem umfassend eine transportable Wasserreinigungsvorrichtung zur Aufbereitung von Trinkwasser, insbesondere zur dezentralen Wasserversorgung unter erschwerten Bedingungen wie beispielsweise nach Naturkatastrophen. Offenbart wird zudem ein Kit zur Wartung und Instandsetzung entsprechender Vorrichtungen.

Der Gegenstand der Erfindung ist in den beigefügten Ansprüchen definiert.

Wasserreinigungsvorrichtungen sind aus dem Alltag bekannt, beispielsweise sogenannte Haushaltswasserfilter. Diese Haushaltswasserfilter bestehen beispielsweise aus einem Aufnahmebehälter für das zu reinigende Wasser, einer Filtervorrichtung wie beispielweise einem Papierfilter, sowie einem Auffangbehälter für das gereinigte Wasser. Entsprechende Filter nutzen die Gravitation für die Reinigung des Wassers und weisen eine geringe Durchflussmenge pro Zeiteinheit auf, die regelmäßig nur für entsprechende Haushaltsanwendungen akzeptabel ist.

Daneben gibt es auch andere größere Wasseraufbereitungsvorrichtungen, die für die Trinkwasserversorgung größerer Einheiten, wie zum Beispiel Stadtteilen, Gemeinden oder Hotelkomplexe eingesetzt werden. Diese sind in der Regel in ein bestehendes Wasserversorgungsnetz eingebunden und weisen eine relativ aufwendige Maschinenanlage auf.

An Wasserreinigungsvorrichtungen, die zum Einsatz in Regionen mit schlechter Infrastruktur oder in Krisengebieten geeignet sind, werden ganz andere Anforderungen gestellt. Solche Wasserreinigungsvorrichtungen arbeiten auf chemischer oder physikalischer Basis und werden regelmäßig bei Naturkatastrophen eingesetzt, wie zum Beispiel bei Überflutungen, Stürmen oder Erdbeben. In solchen Fällen ist es wichtig, dass die betroffenen Menschen schnelle Hilfe erhalten, denn verunreinigtes Wasser kann zu Durchfallerkrankungen bis hin zu Epidemien und Todesfällen führen. Die bei der Notversorgung eingesetzten Wasserreinigungsvorrichtungen dienen in der Regel der Versorgung von großen Menschenmengen ab 100 Personen aufwärts. Die Installation und der Betrieb solcher Anlagen sind aufwendig, da zum einem der Transport dieser großen Anlagen in Katastrophengebiete aufwendig ist und zudem eine Versorgung mit beispielsweise Strom und/oder Chemikalien gewährleistet sein muss. Darüber hinaus sind sie in der Anschaffung und der Unterhaltung recht kostspielig. Die Bedienung und die Wartung ist zudem äußerst kompliziert und kann oft nur von geschultem Personal gewährleistet werden. Weiterhin vergehen vom Auftreten eines Notfalls bis hin zur Inbetriebnahme solcher Anlagen oft mehrere Tage.

Es bestand daher ein Bedürfnis nach leichten, transportablen Wasserreinigungsvorrichtungen zur Aufbereitung von Trinkwasser, die zur dezentralen Wasserversorgung geeignet sind, auch unter erschwerten Bedingungen wie beispielsweise nach Naturkatastrophen oder in Regionen mit schlechter Infrastruktur. Solche transportablen Wasserreinigungsvorrichtungen sind bekannt, und werden beispielsweise bei Reisen oder Expeditionen eingesetzt. Entsprechende Vorrichtungen sind beispielsweise in US 5433848 A, US 5106500 A, CN 107 324 605 A, KR 900002816 B1, US 2434958 A, US 5122272 A, KR 1020110133745 und KR 1019990021981 offenbart. Die US 2008/251434 A1 betrifft eine manuell bedienbare Wasserreinigungsvorrichtung mit einem kolbenartigen Filter. Die bekannten Vorrichtungen werden für den Zweck der kontinuierlichen dezentralen Wasserversorgung strukturschwacher Regionen und Krisengebiete jedoch häufig als nachteilig empfunden, weil sie oft kostspielig in der Anschaffung und im Betrieb sind, weil sie Apparativ aufwendig oder technologisch komplex sind, weil die Wartung und Instandsetzung aufwendig ist und/oder den Zugang zu Chemikalien und/oder Strom erfordert und weil ihre Haltbarkeit unter schweren Bedingungen oft als nachteilig empfunden wird. Darüber hinaus wird die Bedienung einiger Vorrichtungen, insbesondere bei der Gewinnung größerer Wassermengen, als ermüdend oder zumindest unkomfortabel empfunden. Insbesondere vermindert der teilweise filigrane Aufbau einiger Vorrichtungen des Standes der Technik den Einsatz an Wasserquellen, in denen Treibgut und Schwebstoffe im zu reinigenden Wasser eine mechanische Belastung für die Vorrichtungen darstellen. Zahlreiche Vorrichtungen im Stand der Technik erlauben es zudem nicht, die Wasseraufbereitung aus einem größeren Reservoir beliebiger Größe zu betreiben, sondern verfügen nur über limitierte Reinigungskammern, die lediglich einen diskontinuierlichen Betrieb erlauben.

Es war die Aufgabe der vorliegenden Erfindung, die vorstehend beschriebenen Nachteile zu beheben oder zumindest abzuschwächen. Gegenüber dem Stand der Technik war es somit insbesondere die Aufgabe eine Vorrichtung bereitzustellen, die im Betrieb und in der Anschaffung kostengünstig ist, die Apparativ einfach ist, so dass sie auch von ungeschultem Personal betrieben und gewartet werden kann, die nicht den Einsatz von Chemikalien oder Strom erfordert, die eine hohe Haltbarkeit und Nutzungsdauer hat und auch mit stark verunreinigten Wasserquellen betrieben werden kann, wobei ein kontinuierlicher Betrieb bevorzugt wird, durch den ein hoher Wasserdurchfluss zur Versorgung großer Personengruppen von bis zu 25 Menschen möglich ist. Zudem war es die Aufgabe ein Kit für die Wartung und Instandsetzung entsprechender Vorrichtungen anzugeben, mit welchem die Vorrichtungen mit niedrigem Aufwand und Kosten in einer einfachen Art und Weise gereinigt werden können. Zudem sollte ein Kanistersystem angegeben werden, das speziell auf die entsprechende Vorrichtung abgestimmt ist.

Die vorstehenden Aufgaben werden durch ein Kanistersystem gelöst, wie es in den beigefügten Ansprüchen definiert ist. Bevorzugte erfindungsgemäße Ausgestaltungen ergeben sich aus den Unteransprüchen.

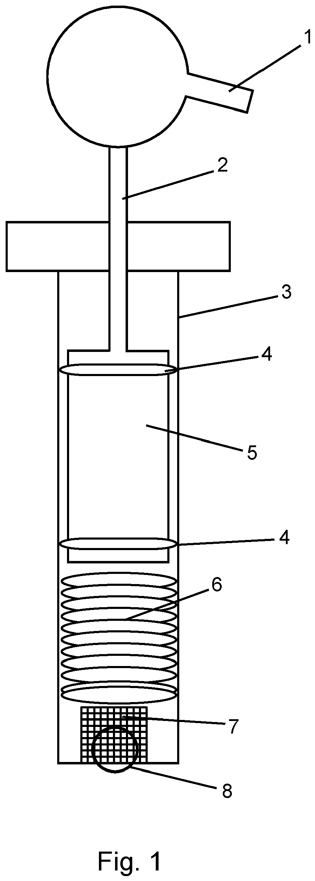

Figur 1 zeigt eine erste bevorzugte Ausführungsform der Vorrichtung zur Wasserreinigung.
Figur 2 zeigt eine zweite bevorzugte Ausführungsform der Vorrichtung zur Wasserreinigung.

In den Figuren sind die Bezugszeichen:
1 Auslasselement (in einer Ausgestaltet in ein Handstück integriert)
2 Hohles Kolbengestänge
3 Gehäuse (in einer Ausgestaltung mit abnehmbarer Kappe)
4 Dichtungselemente (in einer Ausgestaltung als O-Ringe)
5 Filterkolben (umfassend das Filtermaterial)
6 Federelement (in einer Ausgestaltung als metallische Feder)
7 Vorsieb
8 Rückschlagventil

Die vorliegende Erfindung betrifft insbesondere ein Kanistersystem, umfassend einen Kanister und eine Vorrichtung zur Wasserreinigung, umfassend ein Gehäuse 3 mit einer ein Rückschlagventil 8 umfassenden Einlassöffnung und einer hiervon getrennten Auslassöffnung, und einen Filterkolben 5, der über ein hohles Kolbengestänge 2 mit einem Auslasselement 1 verbunden ist,
wobei der Filterkolben 5 so im Gehäuse 3 angeordnet ist, dass sich das hohle Kolbengestänge 2 durch die Auslassöffnung des Gehäuses 3 erstreckt und dass der Innenraum des Gehäuses 3 durch den Filterkolben 5 beim Betrieb der Vorrichtung so in zwei voneinander getrennte Abschnitte unterteilt wird, dass innerhalb des Gehäuses 3 kein Stoffaustausch zwischen den Abschnitten möglich ist,
wobei der Filterkolben 5 ein Filtermaterial zum Filtern von Wasser umfasst, welches den Durchtritt von Wasser durch den Filterkolben 5 in das hohle Kolbengestänge 2 und das Auslasselement 1 ermöglicht,
wobei in dem zwischen dem Filterkolben 5 und der Einlassöffnung des Gehäuses liegenden Abschnitt des Gehäuses 3 ein Federelement 6 so angeordnet ist, dass das Federelement 6 bei einer Relativbewegung des Filterkolbens 5 in Richtung der Einlassöffnung durch den Filterkolben komprimiert wird, dadurch gekennzeichnet, dass das Gehäuse (3) in die Auslassöffnung des Kanisters passt.

Das grundlegende Wirkprinzip lässt sich wie folgt beschreiben. Die Vorrichtung wird beispielsweise in einen mit Wasser gefüllten Kanister gesteckt. Anschließend wird das hohle Kolbengestänge 2 einschließlich des Filterkolbens 5 im Gehäuse heruntergedrückt, beispielsweise durch ein Handstück, welches vorteilhafterweise mit dem Auslasselement 1 verbunden sein kann. Das Kolbengestänge 2 versinkt nun im Gehäuse 3 und drückt den Filterkolben 5 nach unten. Unterstützt durch das Federelement 6 wird der Filterkolben 5 einschließlich des Kolbengestänges 2 nun nach oben gedrückt. Hierbei öffnet sich das Rückschlagventil 8 und Wasser strömt durch das optional vorhandene Vorsieb 7 in das Innere des Gehäuses 3. Durch das erneute Drücken auf das Handstück bewegt sich das Kolbengestänge 2 mit dem Filterkolben 5 nach unten. Das Rückschlagventil 8 ist durch den Druckanstieg im Gehäuseinneren geschlossen und das Wasser wird in Folge der Krafteinwirkung durch den Filterkolben 5 über das hohle Kolbengestänge 2 in das Auslasselement 1 gepumpt. Das gereinigte Wasser passiert das Auslasselement 1 und kann einfach aufgefangen werden, zum Beispiel in einem Glas.

Diese apparativ vergleichsweise einfache und daher besonders kostengünstig herstellbare Vorrichtung ist vorteilhaft, weil sie direkt (d.h. ohne die Notwendigkeit von weiteren wartungsintensiven Teilen, wie z.B. Plastikschläuchen) eingesetzt werden kann, innerhalb weniger Augenblicke betriebsbereit gemacht werden kann und durch die geringe Zahl an Bauteilen sehr robust ist. Besonders vorteilhaft ist, dass der erfindungsgemäß verwendete Kolben durch den eigentlichen Filter gebildet wird und dieser Filter dadurch im Betrieb aktiv durch die zu reinigende Flüssigkeit geführt wird, die lediglich nach dem Durchlaufen des Filterkolbens 5 und des hohlen Kolbengestänges 2 durch das Auslasselement 1 austreten kann. Dadurch wird ein unmittelbarer und direkter Kraftübertrag ermöglicht und ein Austritt von nicht gefilterter Flüssigkeit wird unmöglich gemacht. Diese erfindungsgemäße Ausgestaltung ermöglicht insbesondere eine signifikante Gewichtseinsparung, die bei Systemen mit getrennten Filtern und Pumpkolben regelmäßig nicht erreicht wird.

Um die fortgesetzte Bedienung der Vorrichtung auch bei der Reinigung großer Wassermengen zu erleichtern, ist erfindungsgemäß ein Federelement 6 vorgesehen, wobei das Federelement 6 in dem zwischen dem Filterkolben 5 und der Einlassöffnung des Gehäuses liegenden Abschnitt des Gehäuses 3 so angeordnet ist, dass das Federelement 6 bei einer Relativbewegung des Filterkolbens 5 in Richtung der Einlassöffnung durch den Filterkolben komprimiert wird. Dieses Federelement 6 verursacht beim Runterdrücken des Filterkolbens eine Rückstellkraft, die das im Vergleich zum Herunterdrücken häufig als deutlich unangenehmer und belastender empfundene Zurückziehen des Kolbens, insbesondere gegen einen möglicherweise im Kanister herrschenden Unterdruck, erleichtert. Die Anordnung des Federelementes in dem zwischen dem Filterkolben 5 und der Einlassöffnung des Gehäuses liegenden Abschnitt des Gehäuses 3 ist gänzlich ungewöhnlich. In der Fachwelt bestanden bislang Vorbehalte dagegen, ein Federelement an dieser Stelle in einer entsprechenden Vorrichtung anzuordnen, da dies üblicherweise bedeutet, dass das Federelement beim Einsatz direkt dem zu reinigenden Medium, d.h. im Regelfall Wasser, ausgesetzt ist, was bislang unter Haltbarkeitsgesichtspunkten gemeinhin als nachteilig angesehen wurde. Es hat sich nun jedoch überraschend gezeigt, dass in der erfindungsgemäßen Konstruktion durch die ungewöhnliche Anordnung des Federelementes 6 ein Synergieeffekt erzielt werden kann, der die Standzeit, d.h. die Haltbarkeit, der gesamten Vorrichtung erhöht und die Filterleistung im Betrieb der Vorrichtung auch dann nicht nachteilig verringert wird, wenn die Vorrichtung mit stark verunreinigtem Wasser betrieben wird, welches beispielsweise Schwebstoffe oder größere Partikel enthält. Beim Herabsenken des Filterkolbens kommt es zu einem mechanischen Kontakt zwischen dem Filterkolben 5, d.h. entweder mit dessen Einlassöffnung oder direkt mit der Außenseite des im Filterkolben 5 enthaltenen Filtermaterials, dem Federelement 6 und dem Gehäuse 3. Das Federelement übt im Zuge der Komprimierung eine mechanische Belastung auf die Unterseite des Filterkolbens 5 aus und überträgt Schwingungen auf den Filterkolben 5. Dies führt überraschenderweise dazu, dass grobe Verunreinigungen von der Unterseite des Filterkolbens 5 entfernt werden und die Ausbildung von langwierigen und hartnäckigen Schutzschichten (z.B. Ablagerungen von Schwebstoffen) direkt verhindert wird. Die Vorrichtung enthält somit quasi einen synergistischen Selbstreinigungsmechanismus, der die Unterseite des Filterkolbens 5 sauber hält. Eben jene Unterseite des Filterkolbens 5 (und damit auch des Filtermaterials) ist jedoch besonders anfällig dafür, sich mit Dreck und anderen Verunreinigungen zuzusetzen, insbesondere, wenn z.B. in Kriegs- oder Krisengebieten nur sehr verunreinigtes Wasser zur Verfügung steht. Durch die entsprechende Vorrichtung wird somit eine hohe Aktivität des Filters auch über große Zeiträume hinweg sichergestellt.

Die Vorrichtung besteht aus Komponenten, die dem Fachmann jeweils für sich genommen wohl bekannt sind und die er entweder käuflich erwerben kann oder die er mit üblichen Fertigungsmethoden selbst herstellen kann. Die Verbindung der einzelnen Elemente kann ebenfalls mit üblichen Verfahren erfolgen.

Das Gehäuse 3 ist bevorzugt zylinderförmig, um in die üblicherweise runden Auslassöffnungen von Kanistern zu passen. Das Gehäuse ist hinsichtlich der Materialien nicht besonders beschränkt und kann beispielsweise aus handelsüblichen Kunststoffen oder aus Metall gefertigt werden, wobei ersteres regelmäßig im Hinblick auf die Gewichtsoptimierung vorteilhaft ist, wohingegen letzteres üblicherweise zu haltbareren Vorrichtungen führt. Auch Rückschlagventile 8, hohle Kolbengestänge 2, Auslasselemente 1 und Federelemente 6 sind dem Fachmann bekannt und werden aus üblichen Materialien gefertigt.

Im Rahmen der vorliegenden Erfindung bedeutet das Merkmal, dass der Innenraum des Gehäuses 3 durch den Filterkolben 5 beim Betrieb der Vorrichtung so in zwei voneinander getrennte Abschnitte unterteilt wird, dass innerhalb des Gehäuses 3 kein Stoffaustausch zwischen den Abschnitten möglich ist, dass der Filterkolben beim Betrieb der Vorrichtung gasdicht, d.h. natürlich im Rahmen der für den Fachmann akzeptablen Fehlertoleranz, mit dem umliegenden Gehäuse abschließt, sodass es möglich ist, durch Bewegung des Kolbens eine Druckveränderung in den Abschnitten zu bewirken. Das Prinzip ist dem Fachmann von anderen Kolbenanordnungen, z.B. in Motoren oder Luftpumpen geläufig. Dieser Abschluss wird bevorzugt dadurch erreicht, dass der Filterkolben separate Dichtungselemente umfasst, wobei Dichtungsringe aus Kunststoff, insbesondere O-Ringe, bevorzugt sind. Dem Fachmann ist klar, dass der Dichte Abschluss zwischen dem Filterkolben 5 und dem Gehäuse 3 beim Betrieb der Vorrichtung, d.h. beim Pumpen, gewährleistet sein muss, um die grundlegende Funktion zu erfüllen. Entsprechend versteht der Fachmann, dass auch solche Ausgestaltungen erfindungsgemäß sind, bei denen die Kammern im Ruhezustand der Vorrichtung, d.h. beispielsweise außerhalb des Pumpvorganges oder während der Lagerung, durch den Filterkolben 5 nicht völlig gasdicht voneinander getrennt sind. Dies ist beispielsweise der Fall, wenn der gasdichte Abschluss beim Betrieb der Vorrichtung durch ein oder mehrere Dichtungselemente erreicht wird, die erst bei Kontakt mit Wasser expandieren und daher im trockenen Zustand nicht völlig gasdicht abdichten. Als anderes Beispiel sind solche Anordnungen anzusehen, in denen erst das Herabdrücken des Filterkolbens, d.h. die externe Kraftanwendung, zu einem gasdichten Abschluss zwischen Filterkolben und Gehäuse führt. Entsprechende Dichtungselemente sind dem Fachmann hinreichend bekannt, beispielsweise von handelsüblichen Pumpen und lassen sich leicht in entsprechenden Vorrichtungen realisieren. Entsprechende Ausgestaltungen sind im Rahmen der vorliegenden Erfindung sogar besonders bevorzugt, da sie regelmäßig die Zerlegung entsprechender Vorrichtungen bei der Wartung erleichtern und zudem die leichtere Trocknung der Vorrichtung ermöglichen.

Das Filtermaterial kann der Fachmann aus dem breiten Angebot der kommerziell verfügbaren Filtermaterialien auswählen, wobei die Auswahl im Wesentlichen durch die zu erwartenden Wasserkontamination und den benötigten Reinheitsgrad des aufbereiteten Wassers vorgegeben wird. Bevorzugt ist das Filtermaterial ein Membranfilter, weil diese Filter sich in der Praxis als besonders leistungsfähig und haltbar erwiesen haben. Vor allem können Membranfilter besonders gut mechanisch gereinigt werden, wodurch sich ein besonderer Synergieeffekt mit der Reinigungswirkung ergibt, die in entsprechenden Vorrichtungen durch das Federelement 6 ausgelöst wird.

Regelmäßig wird der Einsatz eines Filtermaterials vorteilhaft sein, welches über einen Porendurchmesser von weniger als 200 nm verfügt, bevorzugt weniger als 150 nm, besonders bevorzugt weniger als 100 nm. Solche besonders bevorzugten Filtermaterialien können häufig sogar etwa 99,99% der im Wasser enthaltenen Bakterien entfernen. Ganz besonders bevorzugt ist der Einsatz eines Filtermaterials, welches über einen Porendurchmesser von weniger als 30 nm verfügt, weil hierdurch auch die Entfernung von anderen schädlichen Bestandteilen, wie beispielsweise Viren, aus dem Wasser möglich wird.

Besonders vorteilhaft ist es, wenn der Filterkolben 5 zwei verschiedene Filtermaterialien umfasst, wobei eines der Filtermaterialien ein Aktivkohlefilter ist, der entweder vor oder hinter dem anderen Filtermaterial am Filterkolben 5 angeordnet ist. Diese vorteilhafte Ausführungsform ist bevorzugt, weil durch einen solchen zusätzlichen Aktivkohlefilter besonders effizient organische Verbindungen, Schwermetalle und ähnliche unerwünschte Chemikalien entfernt werden können.

Das Federelement kann am Gehäuse oder an der Unterseite des Filterkolbens befestigt werden, obwohl ein unbefestigt eigelegtes Federelement 6 bevorzugt ist, welches vom Filterkolben 5 und dem Gehäuse 3 lediglich in seinem Bewegungsspielraum beschränkt wird. Bevorzugt wird das Federelement dementsprechend weder am Gehäuse 3 noch am Filterkolben 5 befestigt. In dieser bevorzugten Ausgestaltung hat das Federelement 6 besonders viel Spielraum und besitzt mehr translatorische Freiheitsgrade. Die vom Federelement 6 auf den Filterkolben 5 ausgeübte mechanische Belastung ist dadurch ungleichmäßiger und gleichzeitig intensiver, wodurch Verunreinigungen am Filterkolben noch effizienter entfernt werden. Darüber hinaus sind unbefestigt eingelegte Federelemente besonders leicht auszuwechseln.

Bevorzugt ist eine Vorrichtung (vorzugsweise wie vorstehend als bevorzugt bezeichnet), wobei an der Einlassöffnung des Gehäuses (3) ein Vorsieb 7 angeordnet ist.

Entsprechend bevorzugte Vorrichtungen sind besonders vorteilhaft, weil es der Einsatz eines Vorsiebes 7, d.h. eines Siebes mit einem relativ großen Porendurchmesser von 0,05 mm bis 1 cm, ermöglicht, größere Verunreinigungen im Wasserreservoir (z.B. Blätter oder Stöcke) bereits vor dem Eintritt in die Vorrichtung abzufangen. Erfreulicherweise ist ein entsprechendes Vorsieb 7 auch besonders leicht zu reinigen, so dass die Wartung erleichtert und die Haltbarkeit gesteigert wird. Das Vorsehen eines entsprechenden Vorsiebs 7 ist bei entsprechenden Vorrichtungen besonders deshalb nützlich, weil solche großen Verunreinigungen, wie sie von einem Vorsieb abgehalten werden, unter Umständen zu einer Beschädigung oder Verkeilung des Federelementes 6 in der Vorrichtung führen könnten. Besonders bevorzugt ist es, dass das Vorsieb 7 ein integraler Bestandteil des Rückschlagventils 8 ist.

Bevorzugt ist eine Vorrichtung (vorzugsweise wie vorstehend als bevorzugt bezeichnet), wobei das Gehäuse 3 eine Länge von zumindest 20 cm, bevorzugt zumindest 25 cm, besonders bevorzugt zumindest 35 cm, aufweist,
und/oder
wobei das Gehäuse 3 und/oder das Kolbengestänge 2 so ausgebildet sind, dass eine variable Längenanpassung der Vorrichtung möglich ist.

Entsprechend bevorzugte Vorrichtungen sind besonders vorteilhaft, weil die resultierenden Vorrichtungen tief in übliche Kanister reinragen und somit auch bei niedrigen Füllständen der Kanister noch in das Wasser reichen, so dass ein Nachfüllen erst später notwendig wird. Bei dieser bevorzugten Ausgestaltung kann besonders effizient auf den Einsatz von zusätzlichen Plastikschläuchen verzichtet werden, die gerade bei tropischem Klima oft ein limitierender Faktor hinsichtlich der Haltbarkeit sind und zudem unerwünschten Plastikmüll hinterlassen. Wird die Vorrichtung so ausgelegt, dass eine variable Längenanpassung der Vorrichtung möglich ist, beispielsweise dadurch, dass sowohl das Kolbengestänge (2) als auch das Gehäuse (3) in ihrem oberen Teil mit einer einfachen ausziehbaren Teleskopverlängerung ausgestattet werden, ergeben sich Vorrichtungen die sich besonders leicht und effizient an unterschiedliche Kanistergrößen anpassen lassen, beispielsweise wenn die Vorrichtung in eine andere Weltregion verlegt wird, in der größere oder kleinere Kanister dominieren. Entsprechende Anordnungen sind dem Fachmann aus seiner Praxis und auch aus dem Alltag (z.B. bei Staubsaugern oder Gartengeräten) wohl bekannt und lassen sich auf entsprechende Vorrichtungen adaptieren.

Bevorzugt ist eine Vorrichtung (vorzugsweise wie vorstehend als bevorzugt bezeichnet), wobei das Gehäuse 3 im Bereich der Auslassöffnung ein Gewinde und/oder ein Befestigungsmittel zur Befestigung an einem Wasserbehälter, insbesondere einem Wasserkanister, umfasst.

Entsprechend bevorzugte Vorrichtungen sind besonders vorteilhaft, weil durch die Befestigung der Vorrichtung an einem Wasserkanister, die durch ein Gewinde oder durch andere dem Fachmann bekannte Befestigungsmittel (wie z.B. Manschettendichtungen, Schellen, Stifte, Spangen) erfolgen kann, ein Transport der Kanister signifikant erleichtert wird, insbesondere wenn durch die Art der Befestigung der Austritt von Wasser aus dem Kanister verhindert wird, weil die Vorrichtung den Kanister verschließt. Auf diesem Weg können vorhandene Kanister an einer geeigneten Wasserstelle befüllt und sofort mit der entsprechenden Vorrichtung versehen werden, bevor sie an die Bedarfsorte ausgeliefert werden.

Bevorzugt ist eine Vorrichtung (vorzugsweise wie vorstehend als bevorzugt bezeichnet), wobei das Federelement 6 eine metallische Feder ist, wobei die metallische Feder bevorzugt aus einem Material besteht, welches ausgewählt ist aus der Gruppe bestehend aus Silber, Kupfer, Eisen, Silberlegierungen, Kupferlegierungen und Eisenlegierungen, bevorzugt ausgewählt ist aus der Gruppe bestehend aus Silber, Kupfer, Silberlegierungen und Kupferlegierungen oder mit einem entsprechenden Material beschichtet ist.

Entsprechend bevorzugte Vorrichtungen sind besonders vorteilhaft, weil sich metallische Federn in der Praxis als besonders einfache und gleichzeitig beständige und daher robuste Federelemente 6 erwiesen haben, was besonders deshalb relevant ist, weil das Federelement 6 in der Vorrichtung im Betrieb höheren Belastungen ausgesetzt ist als üblich, insbesondere durch den Kontakt mit dem zu reinigenden Wasser. Wir haben in Folge von Feldversuchen erkannt, dass sich metallische Federn als relativ einfache Elemente vorteilhafterweise auch mit den in Krisengebieten und/oder entlegenen Regionen zur Verfügung stehenden Werkzeugen herstellen oder reparieren lassen, was für den beabsichtigten Einsatzzweck der Vorrichtungen besonders wünschenswert ist. Ganz besonders bevorzugt ist es, dass die metallische Feder bevorzugt aus einem Material besteht, welches ausgewählt ist aus der Gruppe bestehend aus Silber, Kupfer, Eisen, Silberlegierungen, Kupferlegierungen und Eisenlegierungen, bevorzugt ausgewählt ist aus der Gruppe bestehend aus Silber, Kupfer, Silberlegierungen und Kupferlegierungen oder mit einem entsprechenden Material beschichtet ist. Der Grund hierfür ist, dass wir nach umfassenden Überlegungen einen Weg gefunden haben, der mutmaßlich (bzw. bislang fälschlicherweise angenommenen) nachteilhaften Anordnung des Federelementes 6 in einem Bereich in dem es in Kontakt mit der zu reinigenden Flüssigkeit kommt, zu begegnen. Die metallische Feder kann nämlich aus den angegebenen Metallen gefertigt werden, um sich so den bekannten Effekt der Oligodynamie zu Nutzen zu machen, wobei der Effekt für bevorzugte Materialien besonders ausgeprägt ist und Kupfer und seine Legierung nochmals insbesondere bevorzugt sind. Die Ionen dieser Metalle zeigen eine (mitunter nur schwache) schädigende Wirkung auf unterschiedliche Krankheitserreger, zu denen Bakterien, Viren und Pilze zu zählen sind. Damit sorgt eine bevorzugte Vorrichtung im Betrieb theoretisch auch durch die verwendete Feder für einen antibakteriellen Effekt und sorgt somit für einen synergistischen Effekt. Der Beitrag einer bevorzugten Feder zur Reinigung im laufenden Betrieb ist angesichts der typischen Durchsatzraten und der üblichen Größen des Wasserreservoirs wohl eher niedrig, bzw. schwer zu beziffern. Ganz anders ist dies jedoch nach dem Einsatz der bevorzugten Vorrichtungen. Nach dem Entfernen der bevorzugten Vorrichtungen aus einem kontaminiertem Wasserreservoir wird es vielen Krankheitserregern unmöglich gemacht, auf der Feder zu überleben, so dass durch die Feder keine Kontamination eines zweiten Reservoirs erfolgt, wenn die Vorrichtung wiederverwertet wird. Noch vorteilhafter ist, dass die Reinigung bevorzugter Vorrichtungen besonders einfach ist, da die Lagerung in einer sauberen, leicht sauren Lösung (z.B. durch die Zugabe von Essig o.ä.) aus der Feder in geringem Umfang Metallionen löst, die in der ganzen Reinigungslösung eine antibakterielle Wirkung entfalten. Diese Möglichkeit hat sich in der praktischen Anwendung in von Krankheiten und Epidemien bedrohten Gebieten als besonders vorteilhaft herausgestellt.

Aus den gleichen Gründen bevorzugt ist eine Vorrichtung (vorzugsweise wie vorstehend als bevorzugt bezeichnet), wobei das Vorsieb 7 eine metallisches Vorsieb ist, wobei das metallische Vorsieb bevorzugt aus einem Material besteht, welches ausgewählt ist aus der Gruppe bestehend aus Silber, Kupfer, Eisen, Silberlegierungen, Kupferlegierungen und Eisenlegierungen, bevorzugt ausgewählt ist aus der Gruppe bestehend aus Silber, Kupfer, Silberlegierungen und Kupferlegierungen oder mit einem entsprechenden Material beschichtet ist. Ganz besonders bevorzugt sind Vorrichtungen, in denen sowohl das Vorsieb 7 als auch das Federelement 6 aus entsprechenden Metallen bestehen oder mit diesen Beschichtet sind.

Bevorzugt ist eine Vorrichtung (vorzugsweise wie vorstehend als bevorzugt bezeichnet), wobei das Federelement 6 ein elastischer Schwamm ist, wobei der elastische Schwamm bevorzugt ein natürlicher oder künstlicher Schwamm ist, der einen kleineren Porendurchmesser aufweist als ein gegebenenfalls vorhandenes Vorsieb 7 und einen größeren Porendurchmesser aufweist, als das Filtermaterial.

Entsprechend bevorzugte Vorrichtungen sind besonders vorteilhaft, weil elastische Schwämme eine günstige Alternative zu anderen Federelementen 6, wie beispielsweise metallischen Federn, darstellen, die besonders leicht sind und trotzdem den erfindungsgemäßen Effekt erzielen. Der besondere Vorteil einer solchen bevorzugten Vorrichtung ist es, dass der elastische Schwamm gleichzeitig als weitere Filterstufe fungiert und damit gröbere Verschmutzungen vom Filterkolben 5 abhält. Insgesamt wird die Reinigungsleistung dieser bevorzugten Vorrichtungen in synergistischer Weise weiter erhöht, da der elastische Schwamm eine Tiefenfiltration ermöglicht.

Bevorzugt ist eine Vorrichtung (vorzugsweise wie vorstehend als bevorzugt bezeichnet), wobei der Filterkolben 5 durch ein Schraubgewinde oder einen Schnellverschluss trennbar mit dem hohlen Kolbengestänge 2 verbunden ist.

Entsprechend bevorzugte Vorrichtungen, d.h. Vorrichtungen in denen die Filterkolben 5 auswechselbar angeordnet sind, sind besonders vorteilhaft, weil sich in diesen Vorrichtungen das für die Filterung maßgebliche Element innerhalb kürzester Zeit und auch ohne jede Fachkenntnisse auswechseln lässt, so dass die Betriebszeit der Vorrichtung auch dann maximieren lässt, wenn es letztlich doch zu einer nachlassenden Aktivität des Filtermaterials kommt und/oder sich die Anforderungen an die Vorrichtung derart ändern, dass ein anderes Filtermaterial benötigt wird. In bevorzugten Vorrichtungen können die Filterkolben 5 besonders leicht einer separaten Aufbereitung zugeführt werden, wodurch die im Betrieb der Vorrichtung anfallende Müllmenge erheblich reduziert wird.

Bevorzugt ist eine Vorrichtung (vorzugsweise wie vorstehend als bevorzugt bezeichnet), wobei das hohle Kolbengestänge 2 zwischen dem Auslasselement 1 und dem Filterkolben 5 zumindest teilweise, bevorzugt zu mehr als 50 %, besonders bevorzugt zu mehr als 75 %, mit Filtermaterial gefüllt ist.

Entsprechende Vorrichtungen sind bevorzugt, weil sich hierdurch die Filterleistung der gesamten Vorrichtung, insbesondere bezogen auf das Gewicht und das Volumen der Vorrichtung, signifikant erhöhen lässt, da auch der im hohlen Kolbengestänge 2 zur Verfügung stehende Raum zur Filterung genutzt wird. Dadurch kann beispielsweise bei gleicher Filterleistung der Filterkolben 5 kleiner ausgeführt werden oder die Filterqualität kann gesteigert werden, da die Flüssigkeit auf dem Weg zum Auslass einen größeren Weg durch das Filtermaterial zurücklegen muss.

Aus diesem Grund ist auch eine Vorrichtung bevorzugt (vorzugsweise wie vorstehend als bevorzugt bezeichnet), wobei der Filterkolben 5 um den Faktor 2 oder mehr, bevorzugt um den Faktor 5 oder mehr, ganz besonders bevorzugt um den Faktor 10 oder mehr, länger ist als das hohle Kolbengestänge 2, wobei vorzugsweise das hohle Kolbengestänge 2 und/oder das Auslasselement 1 zumindest teilweise in einem Handstück angeordnet sind.

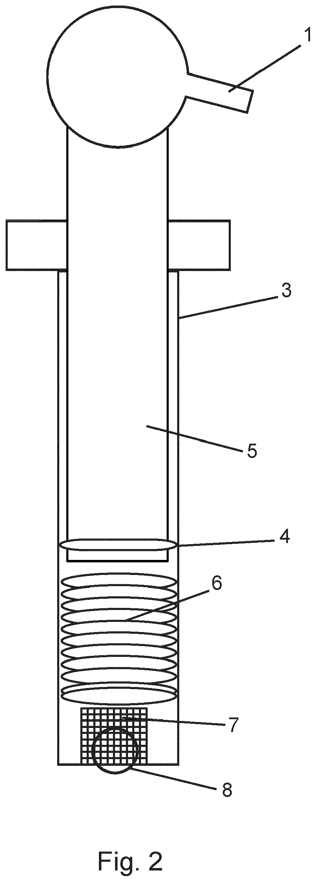

Entsprechende Vorrichtungen weisen eine besonders gute Filterleistung pro Gewichtseinheit auf. Dabei sorgt die bevorzugte Anordnung des hohlen Kolbengestänges 2 in einem Handstück für eine besondere Stabilität gegen im Betrieb auftretende mechanische Belastungen, insbesondere, wenn dieses im Vergleich zum Filterkolben besonders kurz ist. Eine entsprechende Ausgestaltung einer Vorrichtung ist beispielsweise in Figur 2 gezeigt, wobei das hohle Kolbengestänge 2 im Inneren des gezeigten Handstücks verläuft, so dass es in Figur 2 nicht sichtbar ist, und im Inneren des Handstücks mit dem Auslasselement 1 verbunden ist.

Alternativ ist nach den Erkenntnissen des Erfinders auch eine Ausgestaltung der Vorrichtung denkbar, bei der komplett auf das hohle Kolbengestänge 2 verzichtet wird, so dass der Filterkolben 5 direkt mit dem Auslasselement 1 verbunden wird.

Entsprechend wird auch eine Vorrichtung zur Wasserreinigung offenbart, umfassend ein Gehäuse 3 mit einer ein Rückschlagventil 8 umfassenden Einlassöffnung und einer hiervon getrennten Auslassöffnung, und einen Filterkolben 5, der unmittelbar mit einem Auslasselement 1 verbunden ist, wobei der Filterkolben 5 so im Gehäuse 3 angeordnet ist, dass sich der Filterkolben 5 durch die Auslassöffnung des Gehäuses 3 erstreckt und dass der Innenraum des Gehäuses 3 beim Betrieb der Vorrichtung durch den Filterkolben 5 so in zwei voneinander getrennte Abschnitte unterteilt wird, dass innerhalb des Gehäuses 3 kein Stoffaustausch zwischen den Abschnitten möglich ist, wobei der Filterkolben 5 ein Filtermaterial zum Filtern von Wasser umfasst, welches den Durchtritt von Wasser durch den Filterkolben 5 in das Auslasselement 1 ermöglicht, wobei das in dem zwischen dem Filterkolben 5 und der Einlassöffnung des Gehäuses liegenden Abschnitt des Gehäuses 3 ein Federelement 6 so angeordnet ist, dass das Federelement 6 bei einer Relativbewegung des Filterkolbens 5 in Richtung der Einlassöffnung durch den Filterkolben 5 komprimiert wird.

Entsprechende Vorrichtungen, in denen die Krafteinwirkung direkt auf den Filterkolben 5 erfolgt, sind besonders vorteilhaft, da sich ein besonders gutes Verhältnis von Gewicht zu Filterleistung einstellen lässt. Darüber hinaus werden weniger Bauteile benötigt, da auf das hohle Kolbengestänge 2 verzichtet werden kann. Dies erleichtert die Herstellung und reduziert die Kosten. Darüber werden weniger Verbindungsstellen benötigt, die potentielle Schwachstellen der Vorrichtung darstellen, an denen es zu Undichtigkeiten kommen kann.

Offenbart wird auch ein Kit zur Wartung und Instandsetzung einer entsprechenden Vorrichtung, umfassend als separate Bestandteile
A eine Pumpvorrichtung, insbesondere eine Spritze, und
B einen Adapter zur wasserdichten Verbindung der Pumpvorrichtung mit dem Filterkolben 5
   sowie bevorzugt zusätzlich
C ein oder mehrere zusätzliche Filterkolben 5 als Ersatzteil,
   und/oder
D ein Schmiermittel, besonders bevorzugt ein lebensmittelechtes Schmiermittel, insbesondere ein Silikonfett.

Es ist besonders anstrebenswert, dass auch Personen ohne technischen Hintergrund in der Lage sind, die entsprechende Vorrichtung zu warten und instand zu setzen, was insbesondere die Reinigung des Filterkolbens bzw. des Filtermaterials umfasst.

Der Filterkolben 5 bzw. das Filtermaterial, insbesondere wenn es sich um einen Membranfilter handelt, können durch Rückspülen gereinigt werden, wofür das offenbarte Kit bereitgestellt wird. Zur Rückspülung, also zur Reinigung und damit zur Wiederherstellung der Filterleistung, wird der Filterkolben 5 über das hohle Kolbengestänge 2 und das Auslasselement oder, wenn der Filterkolben auswechselbar angeordnet ist, nach dem Trennen vom Kolbengestänge mit einer Pumpvorrichtung, bevorzugt einer Spritze, entgegen der im Betrieb angelegten Durchflussrichtung mit sauberem Wasser durchspült. Dabei wird das Wasser aus Spritze in den Filterkolben 5 gedrückt und der Filterkolben 5 wird so frei gespült. Um einen hinreichenden Wasserdruck zu erzielen ist es notwendig, dass dem Kit ein geeigneter Adapter beiliegt, der zum einen auf die Pumpvorrichtung passt und zum anderen gasdicht mit dem Filterkolben 5, dem hohlen Kolbengestänge 2 oder dem Auslasselement verbunden werden kann, je nachdem, welcher Teil der Reinigung unterworfen wird. Anschließend verbindet man ggf. den Filterkolben 5 wieder mit dem Kolbengestänge 2 und stellt die Vorrichtung wieder her. Bevorzugt umfasst das Kit auch ein oder mehrere zusätzliche Filterkolben 5 als Ersatzteil, damit der Betrieb der Vorrichtung auch dann fortgesetzt werden kann, wenn sich trotz der vollzogenen Reinigung zeigt, dass die Aktivität des Filtermaterials nicht wieder auf ein akzeptables Niveau angehoben werden kann. Außerdem oder alternativ ist bevorzugt, wenn das Kit zudem ein Schmiermittel, besonders bevorzugt ein lebensmittelechtes Schmiermittel, insbesondere ein Silikonfett, umfasst, da die Erneuerung von Schmiermittel insbesondere unter schwierigen Witterungsbedingungen essenziell ist, ein geeignetes Schmiermittel vor Ort aber häufig nicht zu beschaffen ist.

Abschließend betrifft die Erfindung auch ein Kanistersystem, umfassend eine eine entsprechende Vorrichtung und einen Kanister, wobei die Länge des Gehäuses 3 zwischen 75 und 99 %, bevorzugt zwischen 85 und 98 %, besonders bevorzugt zwischen 95 und 97 %, der Höhe des Kanisters beträgt, gemessen zwischen dem Boden des Kanisters und dem höchsten Punkt der Ausgussöffnung des Kanisters. Entsprechende Kanistersysteme sind besonders vorteilhaft, weil die entsprechende Vorrichtung ganz besonders auf den Kanister abgestimmt ist, mit dem sie ein Kanistersystem bildet. Die Vorrichtung reicht beim Einsatz in den Kanister bis knapp über den Boden des Kanisters, so dass die das Rückschlagventil 8 umfassenden Einlassöffnung nahe am tiefsten Punkt des Kanisters liegt. Durch diese Anordnung kann das Kanistersystem auch noch bei niedrigen Füllständen verwendet werden, um aus verunreinigtem Wasser aufbereitetes Trinkwasser zu gewinnen, so dass die Frequenz von Nachfüllvorgängen reduziert wird und weniger Restwasser im Kanister verbleibt.

### Bezugszeichen

- 1: Auslasselement
- 2: Hohles Kolbengestänge
- 3: Gehäuse
- 4: Dichtungselemente
- 5: Filterkolben
- 6: Federelement
- 7: Vorsieb
- 8: Rückschlagventil

## Patentansprüche

1. Kanistersystem, umfassend einen Kanister und eine Vorrichtung zur Wasserreinigung, umfassend ein Gehäuse (3) mit einer ein Rückschlagventil (8) umfassenden Einlassöffnung und einer hiervon getrennten Auslassöffnung, und einen Filterkolben (5), der über ein hohles Kolbengestänge (2) mit einem Auslasselement (1) verbunden ist,
wobei der Filterkolben (5) so im Gehäuse (3) angeordnet ist, dass sich das hohle Kolbengestänge (2) durch die Auslassöffnung des Gehäuses (3) erstreckt und dass der Innenraum des Gehäuses (3) beim Betrieb der Vorrichtung durch den Filterkolben (5) so in zwei voneinander getrennte Abschnitte unterteilt wird, dass innerhalb des Gehäuses (3) kein Stoffaustausch zwischen den Abschnitten möglich ist,
wobei der Filterkolben (5) ein Filtermaterial zum Filtern von Wasser umfasst, welches den Durchtritt von Wasser durch den Filterkolben (5) in das hohle Kolbengestänge (2) und das Auslasselement (1) ermöglicht,
wobei in dem zwischen dem Filterkolben (5) und der Einlassöffnung des Gehäuses liegenden Abschnitt des Gehäuses (3) ein Federelement (6) so angeordnet ist, dass das Federelement (6) bei einer Relativbewegung des Filterkolbens (5) in Richtung der Einlassöffnung durch den Filterkolben (5) komprimiert wird,
**dadurch gekennzeichnet, dass** das Gehäuse (3) in die Auslassöffnung des Kanisters passt.

2. Kanistersystem nach Anspruch 1, wobei an der Einlassöffnung des Gehäuses (3) ein Vorsieb (7) angeordnet ist
und/oder
wobei das Vorsieb (7) eine metallisches Vorsieb ist, wobei das metallische Vorsieb bevorzugt aus einem Material besteht, welches ausgewählt ist aus der Gruppe bestehend aus Silber, Kupfer, Eisen, Silberlegierungen, Kupferlegierungen und Eisenlegierungen, bevorzugt ausgewählt ist aus der Gruppe bestehend aus Silber, Kupfer, Silberlegierungen und Kupferlegierungen oder mit einem entsprechenden Material beschichtet ist.

3. Kanistersystem nach Anspruch 2, wobei das Vorsieb (7) ein integraler Bestandteil des Rückschlagventils (8) ist.

4. Kanistersystem nach einem der Ansprüche 1 bis 3, wobei der Filterkolben (5) einen oder mehrere Dichtungselemente (4) umfasst
und/oder
wobei das Filtermaterial ein Membranfilter ist,
und/oder
wobei das Filtermaterial einen Porendurchmesser von weniger als 150 nm aufweist,
und/oder
wobei der Filterkolben (5) zwei verschiedene Filtermaterialien umfasst, wobei eines der Filtermaterialien ein Aktivkohlefilter ist, der entweder vor oder hinter dem anderen Filtermaterial am Filterkolben (5) angeordnet ist.

5. Kanistersystem nach einem der Ansprüche 1 bis 4, wobei das Gehäuse (3) eine Länge von zumindest 20 cm, bevorzugt zumindest 25 cm, besonders bevorzugt zumindest 35 cm, aufweist,
und/oder
wobei das Gehäuse (3) und/oder das Kolbengestänge (2) so ausgebildet sind, dass eine variable Längenanpassung der Vorrichtung möglich ist.

6. Kanistersystem nach einem der Ansprüche 1 bis 5, wobei das Gehäuse (3) im Bereich der Auslassöffnung ein Gewinde und/oder ein Befestigungsmittel zur Befestigung an dem Kanister, umfasst.

7. Kanistersystem nach einem der Ansprüche 1 bis 6, wobei das Federelement (6) weder am Gehäuse (3) noch am Filterkolben (5) befestigt ist,
und/oder
wobei das Federelement (6) eine metallische Feder oder ein elastischer Schwamm ist,
wobei die metallische Feder bevorzugt aus einem Material besteht, welches ausgewählt ist aus der Gruppe bestehend aus Silber, Kupfer, Eisen, Silberlegierungen, Kupferlegierungen und Eisenlegierungen, bevorzugt ausgewählt ist aus der Gruppe bestehend aus Silber, Kupfer, Silberlegierungen und Kupferlegierungen oder mit einem entsprechenden Material beschichtet ist
und
wobei der elastische Schwamm bevorzugt ein natürlicher oder künstlicher Schwamm ist, der einen kleineren Porendurchmesser aufweist als ein gegebenenfalls vorhandenes Vorsieb (7) und einen größeren Porendurchmesser aufweist, als das Filtermaterial.

8. Kanistersystem nach einem der Ansprüche 1 bis 7, wobei der Filterkolben (5) durch ein Schraubgewinde oder einen Schnellverschluss trennbar mit dem hohlen Kolbengestänge (2) verbunden ist.

9. Kanistersystem nach einem der Ansprüche 1 bis 8, wobei das hohle Kolbengestänge (2) zwischen dem Auslasselement (1) und dem Filterkolben (5) zumindest teilweise, bevorzugt zu mehr als 50 %, besonders bevorzugt zu mehr als 75 %, mit Filtermaterial gefüllt ist.

10. Kanistersystem nach einem der Ansprüche 1 bis 9, wobei der Filterkolben (5) um den Faktor 2 oder mehr, bevorzugt um den Faktor 5 oder mehr, ganz besonders bevorzugt um den Faktor 10 oder mehr, länger ist als das hohle Kolbengestänge (2), wobei vorzugsweise das hohle Kolbengestänge (2) und/oder das Auslasselement (1) zumindest teilweise in einem Handstück angeordnet sind.

11. Kanistersystem, wobei die Länge des Gehäuses (3) zwischen 75 und 99 %, bevorzugt zwischen 85 und 98 %, besonders bevorzugt zwischen 95 und 97 %, der Höhe des Kanisters beträgt, gemessen zwischen dem Boden des Kanisters und dem höchsten Punkt der Ausgussöffnung des Kanisters.

## Claims

1. Canister system, comprising a canister and a device for water purification, comprising a housing (3) having an inlet opening, comprising a non-return valve (8), and an outlet opening separated therefrom, and a filter piston (5) which is connected to an outlet element (1) by way of a hollow piston rod (2),
wherein the filter piston (5) is arranged in the housing (3) such that the hollow piston rod (2) extends through the outlet opening in the housing (3) and that, during operation of the device, the interior of the housing (3) is subdivided into two portions, which are separated from one another, by the filter piston (5) such that no mass transfer between the portions is possible within the housing (3),
wherein the filter piston (5) comprises a filter material for filtering water, said filter material allowing water to pass through the filter piston (5) into the hollow piston rod (2) and the outlet element (1),
wherein a spring element (6) is arranged in that portion of the housing (3) which lies between the filter piston (5) and the inlet opening in the housing such that the spring element (6) is compressed by the filter piston (5) in the case of a relative movement of the filter piston (5) towards the inlet opening,
**characterized in that** the housing (3) fits into the outlet opening in the canister.

2. Canister system according to Claim 1, wherein a preliminary screen (7) is arranged at the inlet opening in the housing (3),
and/or
wherein the preliminary screen (7) is a metallic preliminary screen, wherein the metallic preliminary screen preferably consists of a material which is selected from the group consisting of silver, copper, iron, silver alloys, copper alloys and iron alloys, preferably is selected from the group consisting of silver, copper, silver alloys and copper alloys, or is coated with a corresponding material.

3. Canister system according to Claim 2, wherein the preliminary screen (7) is an integral part of the non-return valve (8).

4. Canister system according to one of Claims 1 to 3, wherein the filter piston (5) comprises one or more seal elements (4),
and/or
wherein the filter material is a membrane filter,
and/or
wherein the filter material has a pore diameter of less than 150 nm,
and/or
wherein the filter piston (5) comprises two different filter materials, wherein one of the filter materials is an activated carbon filter which is arranged on the filter piston (5) either upstream or downstream of the other filter material.

5. Canister system according to one of Claims 1 to 4, wherein the housing (3) has a length of at least 20 cm, preferably at least 25 cm, particularly preferably at least 35 cm,
and/or
wherein the housing (3) and/or the piston rod (2) are/is designed such that a variable length adaptation of the device is possible.

6. Canister system according to one of Claims 1 to 5, wherein the housing (3) comprises, in the region of the outlet opening, a thread and/or a fastening means for fastening to the canister.

7. Canister system according to one of Claims 1 to 6, wherein the spring element (6) is fastened neither to the housing (3) nor to the filter piston (5),
and/or
wherein the spring element (6) is a metallic spring or an elastic sponge,
wherein the metallic spring preferably consists of a material which is selected from the group consisting of silver, copper, iron, silver alloys, copper alloys and iron alloys, preferably is selected from the group consisting of silver, copper, silver alloys and copper alloys, or is coated with a corresponding material,
and
wherein the elastic sponge is preferably a natural or artificial sponge which has a smaller pore diameter than a possibly present preliminary screen (7) and has a greater pore diameter than the filter material.

8. Canister system according to one of Claims 1 to 7, wherein the filter piston (5) is separably connected to the hollow piston rod (2) by a screw thread or a quick-action fastener.

9. Canister system according to one of Claims 1 to 8, wherein the hollow piston rod (2) between the outlet element (1) and the filter piston (5) is filled at least partially, preferably to an extent of more than 50%, particularly preferably to an extent of more than 75%, with filter material.

10. Canister system according to one of Claims 1 to 9, wherein the filter piston (5) is longer than the hollow piston rod (2) by a factor of 2 or more, preferably by a factor of 5 or more, very particularly preferably by a factor of 10 or more, wherein preferably the hollow piston rod (2) and/or the outlet element (1) are/is at least partially arranged in a handpiece.

11. Canister system, wherein the length of the housing (3) is between 75 and 99%, preferably between 85 and 98%, particularly preferably between 95 and 97%, of the height of the canister, measured between the bottom of the canister and the highest point of the spout opening in the canister.

## Revendications

1. Système de bidon, comprenant un bidon et un dispositif pour la purification de l'eau, comprenant un boîtier (3) doté d'un orifice d'entrée comprenant un clapet de refoulement (8) et un orifice de sortie séparé de celui-ci, ainsi qu'un piston filtrant (5) qui est relié à un élément de sortie (1) par une tige de piston (2),
ledit piston filtrant (5) étant agencé dans le boîtier (3) de telle sorte que la tige de piston (2) creuse passe au travers de l'orifice de sortie du boîtier (3) et que l'intérieur dudit boîtier (3) est divisé par le piston filtrant (5) en deux sections séparées l'une de l'autre lorsque le dispositif est en marche, de sorte qu'aucun échange de matière n'est possible entre les sections à l'intérieur du boîtier (3),
le piston filtrant (5) comprenant un matériau filtrant pour filtrer l'eau, ce qui permet le passage de l'eau au travers du piston filtrant (5) dans la tige de piston (2) creuse et l'élément de sortie (1),
un élément de ressort (6) étant agencé dans la section du boîtier (3) comprise entre le piston filtrant (5) et l'orifice d'entrée du boîtier de telle sorte que ledit élément de ressort (6) est comprimé par le piston filtrant (5) lors d'un mouvement relatif du piston filtrant (5) en direction de l'orifice d'entrée,
**caractérisé en ce que** le boîtier (3) s'adapte à l'orifice d'entrée du bidon.

2. Système de bidon selon la revendication 1, un préfiltre (7) étant agencé dans l'orifice d'entrée du boîtier (3)
et/ou
ledit préfiltre (7) étant un préfiltre métallique, ledit préfiltre métallique étant de préférence constitué d'un matériau choisi parmi le groupe englobant l'argent, le cuivre, le fer, les alliages d'argent, les alliages de cuivre et les alliages de fer, de préférence choisi parmi le groupe englobant l'argent, le cuivre, les alliages d'argent et les alliages de cuivre ou étant revêtu d'un matériau correspondant.

3. Système de bidon selon la revendication 2, le préfiltre (7) faisant partie intégrante du clapet de refoulement (8).

4. Système de bidon selon l'une quelconque des revendications 1 à 3, le piston filtrant (5) comprenant un ou plusieurs éléments d'étanchéité (4),
et/ou
le matériau filtrant étant un filtre à membrane,
et/ou
le matériau filtrant présentant un diamètre de pores inférieur à 150 nm,
et/ou
le piston filtrant (5) comprenant deux matériaux filtrants différents, un des matériaux filtrants étant un filtre à charbon actif qui est agencé soit devant soit derrière l'autre matériau filtrant sur le piston filtrant (5).

5. Système de bidon selon l'une quelconque des revendications 1 à 4, le boîtier (3) présentant une longueur d'au moins 20 cm, de préférence d'au moins 25 cm, de préférence particulière d'au moins 35 cm,
et/ou
le boîtier (3) et/ou la tige de piston (2) étant conçus de telle sorte qu'il est possible d'adapter la longueur variable du dispositif.

6. Système de bidon selon l'une quelconque des revendications 1 à 5, le boîtier (3) comprenant dans la zone de l'orifice de sortie un filetage et/ou un moyen de fixation prévu pour sa fixation sur le bidon.

7. Système de bidon selon l'une quelconque des revendications 1 à 6, l'élément de ressort (6) n'étant fixé ni sur le boîtier (3) ni sur le piston filtrant (5),
et/ou
l'élément de ressort (6) étant un ressort métallique ou une éponge élastique,
ledit ressort métallique étant de préférence constitué d'un matériau choisi parmi le groupe englobant l'argent, le cuivre, le fer, les alliages d'argent, les alliages de cuivre et les alliages de fer, de préférence choisi parmi le groupe englobant l'argent, le cuivre, les alliages d'argent et les alliages de cuivre ou étant revêtu d'un matériau correspondant
et
l'éponge élastique étant de préférence une éponge naturelle ou artificielle qui présente un diamètre de pores inférieur à celui d'un préfiltre (7) éventuellement présent et qui présente un diamètre de pores supérieur à celui du matériau filtrant.

8. Système de bidon selon l'une quelconque des revendications 1 à 7, le piston filtrant (5) étant relié de manière détachable à la tige de piston (2) creuse par un filetage ou une fermeture rapide.

9. Système de bidon selon l'une quelconque des revendications 1 à 8, la tige de piston (2) creuse étant remplie au moins partiellement, de préférence à plus de 50 %, de préférence particulière à plus de 75 %, d'un matériau filtrant entre l'élément de sortie (1) et le piston filtrant (5).

10. Système de bidon selon l'une quelconque des revendications 1 à 9, le piston filtrant (5) étant plus long d'un facteur 2 ou plus, de préférence d'un facteur 5 ou plus, de préférence particulière d'un facteur 10 ou plus, que la tige de piston (2) creuse, de préférence ladite tige de piston (2) creuse et/ou l'élément de sortie (1) étant agencés au moins partiellement dans une pièce à main.

11. Système de bidon, la longueur du boîtier (3) étant égale à entre 75 et 99 %, de préférence entre 85 et 98 %, de préférence particulière entre 95 et 97 % de la hauteur du bidon mesurée entre le fond du bidon et le point le plus haut de l'orifice de déversement du bidon.
